(19) **Europäisches Patentamt**

**European Patent Office**

**Office européen des brevets**

(11) **EP 1 240 935 A2**

(12) **EUROPEAN PATENT APPLICATION**

(43) Date of publication:
**18.09.2002 Bulletin 2002/38**

(51) Int Cl.⁷: **B01D 46/00**, B01D 46/52,
B01D 39/16

(21) Application number: **02005132.2**

(22) Date of filing: **07.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Kawano, Eizo**<br>  **Ibaraki-shi, Osaka (JP)**<br>• **Maeoka, Takuya**<br>  **Ibaraki-shi, Osaka (JP)** |
| (30) Priority: **16.03.2001 JP 2001076395** | (74) Representative: **Grünecker, Kinkeldey, Stockmair & Schwanhäusser Anwaltssozietät Maximilianstrasse 58 80538 München (DE)** |
| (71) Applicant: **NITTO DENKO CORPORATION Osaka (JP)** | |

(54) **Filtering medium for air filters and process for producing the same**

(57) A filtering medium for air filters, comprising a laminate including at least one porous polytetrafluoroethylene (PTFE) membrane (1) and at least one air-permeable supporting member (2), the filtering medium having a surface potential of 0.3 kV or lower in terms of absolute value. By regulating the absolute value of surface potential so as to be within that range, the formation of a through-hole attributable to a discharge (spark) caused by, e.g., contact with a bare hand can be prevented. Thus, the leakage phenomenon observed in filtering media for air filter using a porous PTFE membrane can be inhibited.

*FIG. 1*

EP 1 240 935 A2

**Description**

FIELD OF THE INVENTION

The present invention relates to a filtering medium for air filters which employs a porous polytetrafluoroethylene (hereinafter abbreviated as "PTFE") membrane and a process for producing the filtering medium.

DESCRIPTION OF THE RELATED ART

Filtering media produced by adding a binder to glass fibers and forming the mixture into a sheet have hitherto been often used in air filters for clean rooms. Such filtering media have several problems. For example, since adherent short fibers are present in such a filtering medium, the filtering medium itself generates a dust in folding processing. Upon contact with some kind of chemical such as hydrofluoric acid, the fibers deteriorate and generate a dust. Furthermore, the binder ingredient releases a gas, which reduces the yield of products . Under these circumstances, porous PTFE membranes are recently used as high-performance filtering media in clean rooms in the semiconductor industry and other fields. An example thereof is the porous PTFE membrane described in Japanese Patent Laid-Open No. 202217/1993. Since porous PTFE membranes have poor stiffness, they are usually laminated to another air-permeable material for the purpose of reinforcement before being used as filtering media. Such a filtering medium is folded into the shape of consecutive W's (pleated), and beads are formed thereon with a hot-melt material or the like so as to prevent opposed surfaces of the filtering medium from coming into contact with each other. Thereafter, the filtering medium is attached to a metal or another frame to obtain an air filter unit.
The following methods are generally used for the pleating of filtering media.

(1) A method called a rotary processing, in which a pair of rotating drums each having blades arranged on the periphery is kept being rotated and the filtering medium is passed therebetween to thereby pleat it.
(2) A method called a reciprocating processing, in which a pair of blades disposed at a given distance in the traveling direction for the filtering medium is moved to fold the filtering medium alternately from both sides.

A filtering medium for air filters which comprises a laminate of a porous PTFE membrane with an air-permeable supporting member is apt to be electrostatically charged by friction during the laminating step and the step of fabricating a filter unit therefrom. When a conductor is brought close to such a filtering medium which has come to have an increased surface potential through static buildup or when a human touches the filtering medium with the bare hand, then a discharge (spark) may occur to form a through-hole in the filtering medium. The formation of through-holes results in a reduced collection efficiency of the filtering medium and the so-called leakage phenomenon occurs in which the efficiency of collection of particles having a diameter smaller than the minor diameter of sections of the through-holes has no particle diameter dependence. Especially in the laminating step, the filtering medium formed by laminating is often wound thickly into a roll and, hence, the surface potential of the filtering medium is apt to increase. Even after the pleating step, the surface potential of the filtering medium increases when the laminate folded is stored in the stacked state. Furthermore, since the pleating itself is a step accompanied by considerable friction, the filtering media which have been pleated mostly have an increased surface potential. Consequently, the filtering media which have been wound or folded are especially apt to undergo the leakage phenomenon.

SUMMARY OF THE INVENTION

The present invention has been made in view of those circumstances.
Accordingly, an object of the present invention is to inhibit the leakage phenomenon in filter media for air filter, which use a porous PTFE membrane.
The invention provides a filtering medium for air filters, comprising a laminate which comprises at least one porous PTFE membrane and at least one air-permeable supporting member, the filtering medium having a surface potential of 0.3 kV or lower in terms of absolute value.
The surface potential of an electrostatically charged material to be examined can be determined by measuring the potential of a conductor placed near the material. Specifically, the potential can be easily measured with a commercial surface potential meter. By regulating the absolute value of the surface potential to 0.3 kV or lower (the surface potential is in the range of from -0.3 to 0.3 kV), the formation of a through-hole can be prevented because mere contact with, e.g., a bare hand does not result in a discharge.
The filtering medium for air filters of the invention has preferably undergone a treatment for static-charge diminution so that the absolute value of the surface potential thereof is within that range even when the filtering medium has been folded into the shape of consecutive W's.

The invention can further provides a filtering medium for air filters which has been wound into a roll and in which the outermost lap of the roll has a surface potential of 0.3 kV or lower in terms of absolute value. The form folded into the shape of consecutive W's and the form wound into a roll are frequently used in storage, transportation, shipping, etc. It is therefore preferred to regulate the surface potential of the filtering medium in these forms to a value within the range shown above to thereby inhibit the occurrence of the leakage phenomenon.

The invention further provides a first process for producing a filtering medium for air filters, which comprises the step of producing a laminate comprising at least one porous PTFE membrane and at least one air-permeable supporting member, and the step of diminishing the static charge built up on at least one member selected from the group consisting of (1) the laminate and (2) the materials constituting the laminate. This process preferably further includes the step of folding the laminate into the shape of consecutive W's, and the step of static-charge diminution is preferably applied at least to the laminate which has been folded. This step is intended to eliminate the static charge resulting from the pleating.

The invention further provides a second process for producing a filtering medium for air filters which is a laminate comprising at least one porous PTFE membrane and at least one air-permeable supporting member, wherein at least one treatment selected from the stretching of a PTFE molding for obtaining the porous PTFE membrane and the superposition of materials for constituting the layered product is conducted in a series of steps comprising unwinding a roll-form work to be treated, treating the unwound work, and winding the work into a roll after the treatment, while diminishing the static charge built up on the work, to thereby successively wind the work which has undergone the treatment and is in a charge-diminished state. The treatment of the filtering medium (or the porous PTFE membrane as a component of the filtering medium) for static charge diminution cannot be effectively conducted after the work has been wound into a roll. However, when the work is wound while diminishing the static charge, a roll of the filtering medium (or porous PTFE membrane) having a low surface potential can be easily obtained even when the filtering medium (or PTFE membrane) is wound thickly.

In the second process, when the treatment is stretching, the work to be treated is the PTFE molding and the work which has undergone the treatment is a porous PTFE membrane. When the treatment is superposition, the works to be treated are sheet materials (which comprise the porous PTFE membrane and an air-permeable supporting member or are in the form of a multilayered assemblage obtained by superposing these beforehand) and the work which has undergone the treatment is a laminate, i.e., the filtering medium. When stretching and superposition are conducted as successive treatments, the works to be treated are the PTFE molding and the other sheet material(s) and the work which has undergone the treatments is the filtering medium.

In the processes of the invention, the treatment for static charge diminution of works of various kinds is preferably conducted in a noncontact manner, for example, by blowing ions.


BRIEF DESCRIPTION OF THE DRAWINGS

The foregoing and other aims and advantages of the invention will be apparent from the following detailed description and the accompanying drawings, in which:

    Fig. 1 is a sectional view of one embodiment of the filtering medium for air filters of the invention;
    Fig. 2 is a sectional view of another embodiment of the filtering medium for air filters of the invention;
    Fig. 3 is a sectional view of still another embodiment of the filtering medium for air filters of the invention; and
    Fig. 4 is a view illustrating the structure of an example of apparatus for static charge diminution.


DESCRIPTION OF THE PREFERRED EMBODIMENTS

Preferred embodiments of the invention will be explained below by reference to the drawings.

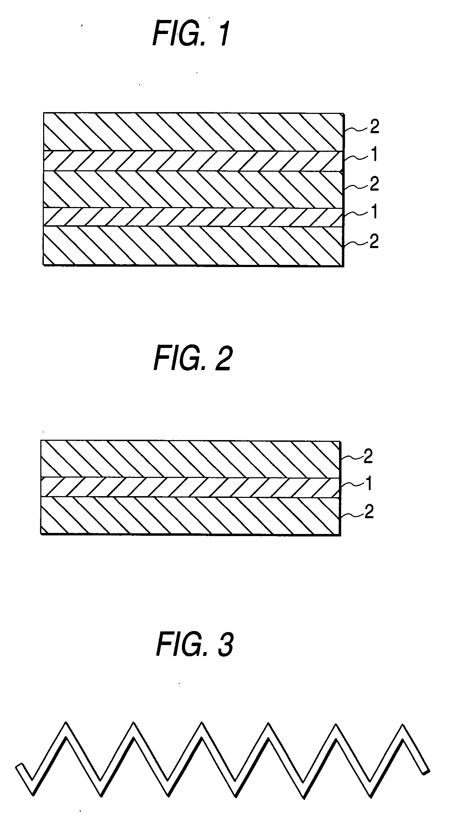

Fig. 1 is a sectional view of one embodiment of the filtering medium of the invention, and Fig. 2 is a sectional view of another embodiment of the filtering medium. As shown in these figures, the filtering medium of the invention is a laminate including at least one porous PTFE membrane 1 and at least one air-permeable supporting member 2. In the two figures, the porous PTFE membrane 1 and the air-permeable supporting member 2 are superposed alternately. However, the filtering medium of the invention is not limited to this constitution, and may contain a part comprising superposed layers of either the porous PTFE membrane 1 or the air-permeable supporting member 2.

Fig. 3 is a sectional view of one embodiment of the filtering medium for air filters which has been pleated. When a continuous filtering medium is folded so as to form alternating ridges and grooves (pleated) at given intervals along the machine direction, then a filtering medium having the shape of consecutive W's when viewed from an edge side thereof can be obtained. Known techniques for pleating are the two techniques described above (i.e., rotary processing and reciprocating processing).

As the porous PTFE membrane may be used one produced by a known process. A process for producing the porous membrane is explained below as an example. First, a liquid lubricant is added to a fine powder of PTFE to prepare a pasty mixture, and this mixture is preliminarily molded. The liquid lubricant is not particularly limited as long as it can wet the surface of the fine PTFE powder and be removed by extraction or heating. Examples of the lubricant include hydrocarbons such as liquid paraffins, naphtha, and white oil. The appropriate range of the amount of the liquid lubricant to be added is about 5 to 50 parts by weight per 100 parts by weight of the fine PTFE powder. The preliminary molding is preferably conducted at such a pressure that the liquid lubricant is not squeezed out. Subsequently, the mixture preliminarily molded is formed into a sheet by paste extrusion or rolling, and the resultant PTFE molding is stretched at least uniaxially to thereby obtain a porous PTFE membrane. The stretching of the PTFE molding is preferably conducted after the liquid lubricant has been removed therefrom. In general, the stretching temperature is preferably 20°C or higher but lower than the melting point of the PTFE, and the stretch ratio is preferably 50 or higher in terms of areal ratio.

The porous PTFE membrane is not particularly limited. However, it preferably has an average pore diameter of from 0.01 to 5 $\mu$m, an average fiber diameter of from 0.02 to 0.3 $\mu$m, and a pressure loss, as measured in air permeation at a flow rate of 5.3 cm/sec, of from 5 to 100 mmH$_2$O (hereinafter, pressure loss measurement is made under these conditions). Although porous PTFE membranes having these properties are suitable for use in filtering media for air filters, they are more apt to suffer the leakage phenomenon attributable to a discharge (spark) of the static charge built up therein. It is therefore especially preferred to apply the invention thereto.

The air-permeable supporting member is not particularly limited in material, structure, or shape. However, use may be made of a material having a larger pore diameter than the porous PTFE membrane and excellent air permeability, such as a felt, nonwoven fabric, woven fabric, mesh (net sheet), or another porous material. It is, however, preferred to use a nonwoven fabric from the standpoints of strength, flexibility, and workability. More preferred is a nonwoven fabric in which part or all of the fibers constituting the fabric are composite synthetic fibers having a core/sheath structure in which the core has a higher melting point than the sheath. Although the material of the air-permeable supporting member is not particularly limited, usable examples thereof include polyolefins (such as polyethylene (PE) and polypropylene (PP)), polyamides, polyesters (such as poly(ethylene terephthalate)(PET)), aromatic polyamides, and composites of these.

For superposing an air-permeable supporting member on a porous PTFE membrane or for superposing an air-permeable supporting member on another air-permeable supporting member, use may be made of a method in which these materials are merely stacked up or a method in which laminating with, e.g., an adhesive or heat is used. For example, in the case of thermolaminating, the materials may be united by thermally melting part of the air-permeable supporting member, e.g., a nonwoven fabric. An adhesive such as, e.g., a powdery, granular, or net-form hot-melt adhesive or a thermosetting adhesive may be used for the laminating. Alternatively, a pressure-sensitive adhesive may be applied in dots or streaks or in a net pattern to bond the materials.

On the other hand, methods for superposing a porous PTFE membrane on another porous PTFE membrane also are not particularly limited. These membranes may be merely stacked up. Alternatively, use may be made of a method in which the membranes are laminated to each other by pressing during membrane formation or a method in which the membranes are bonded to each other by thermal fusion.

An example of methods for obtaining a filtering medium reduced in surface potential will be explained below.

The treatment for static charge diminution (static charge diminution treatment) is preferably conducted after a step accompanied by static buildup due to friction or peeling (if possible, immediately after the step). Examples of steps in which static buildup is apt to occur include the step of stretching a PTFE molding and the step of superposing sheet materials. When each of these steps is followed by a static charge diminution treatment, the absolute value of surface potential can be reduced without fail. However, the static charge diminution may be conducted in other manners as long as the aim of the invention can be accomplished. For example, use may be made of a method in which a stretching step and a superposition step are conducted successively and, thereafter, the static charges which have been built up in these steps are diminished together. Alternatively, static charge diminution may be conducted only in a PTFE stretching step. In a pleating step also, a charge is apt to build up on the filtering medium due to friction between the layered product and the blades. When the filtering medium is pleated, the filtering medium pleated is preferably subjected to a static charge diminution treatment at least once.

In a process for producing a filtering medium, each step is conducted frequently by a method in which a continuous work to be subjected to the intended treatment in the step (e.g., superposition) is unwound from a roll thereof and the work which has undergone the treatment is rewound successively. However, during the unwinding from a roll, handling in the treatment, and winding after the treatment, a static charge is apt to build up due to friction with rolls, etc. Once the work is wound into a roll, it is difficult to diminish the static charge built up on the work. Consequently, in the case of using a method in which the work treated is wound into a roll, it is preferred that the work be successively subjected to a static charge diminution treatment to diminish the static charge before the work is wound into a roll.

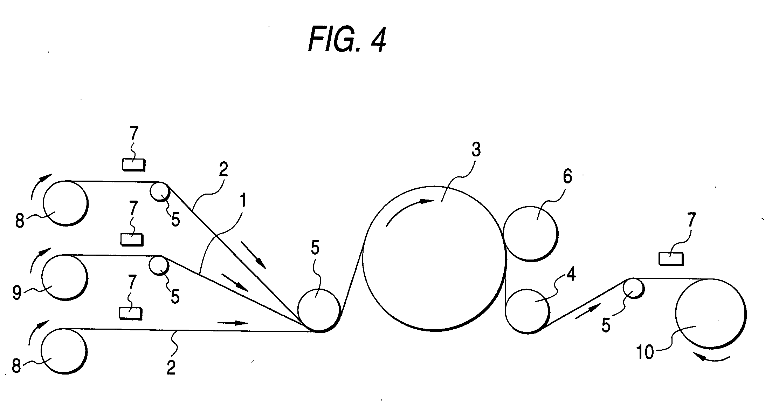

An example of the static charge diminution treatment of a work to be wound into a roll is explained by reference to Fig. 4, with respect to a superposition step for thermolaminating an air-permeable supporting member to a porous PTFE membrane. Two sheets of an air-permeable supporting member 2 and a porous PTFE membrane 1 are unwound respectively from air-permeable supporting member rolls 8 and a porous PTFE membrane roll 9, and are superposed together by means of directional changes with turning rolls 5. The sheet materials superposed are heated while running along the surface of a heating roll 3, and sandwiched between the heating roll 3 and a pinch roll 6. As a result, the sheet materials are united together so that the porous PTFE membrane 1 is interposed between the air-permeable supporting members 2. This filtering medium is led by a silicone roll 4 and a turning roll 5 and then wound into a filtering medium roll 10. In this process, a static charge diminution treatment may be given to at least one work selected from the air-permeable supporting members which have been unwound, the porous PTFE membrane which has been unwound, and the filtering medium which has not been wound. In the example shown in the figure, a static eliminator 7 is disposed near each of those parts of the sheet materials which have just been unwound respectively from the rolls 8 and roll 9 and of that part of the filtering medium which is located just before the roll 10. Namely, all of the air-permeable supporting members, porous PTFE membrane, and filtering medium are subjected to a static charge diminution treatment.

The static charge diminution treatment is not particularly limited in method thereof, as long as it can diminish static charges. Various static eliminators can be used for the treatment. The static charge diminution treatment of either a porous PTFE membrane or a layered product including the membrane is desirably conducted, while preventing sparking, by a method which is not accompanied by local and abrupt movement of static charges built up. Examples of such a static charge diminution treatment include treatments in which the work to be treated does not come into contact with any other member. Specifically, a preferred method is to blow ions against the work to be treated. Especially preferred is a method in which both cations and anions are blown.

By the treatment described above, the surface potential of the work is lowered to 0.3 kV or below, preferably 0.1 kV or below, in terms of absolute value. Thus, a filtering medium for air filters can be provided which is prevented from suffering the leakage phenomenon (preferably to such a degree that a particle diameter dependence of collection efficiency can be observed in the particle diameter range of from 0.1 to 0.3 $\mu$m). As will be demonstrated in the following section of Examples, the particle diameter dependence cannot be observed in filtering media which have had too large an absolute value of surface potential and hence undergone sparking.

The invention will be explained below in more detail by reference to Examples, but the invention should not be construed as being limited to the following Examples.

All measurements of surface potential were made with "KSD-0103" manufactured by Kasuga Electric Works Ltd. Like general surface potential meters, this surface potential meter is based on the technique in which the potential of a substance to be examined is determined from the potential of a conductor placed near the substance.

In the following Examples, collection efficiency was determined by the following method.

Method of Determining Collection Efficiency

A sample was attached to a circular holder having an effective area of 100 cm$^2$. A pressure difference was given between the inlet side and the outlet side to pass air through the sample at a flow rate regulated to 5.3 cm/sec with a flowmeter. Polydisperse dioctyl phthalate (DOP) was supplied to the upstream side so that the number of particles having a particle diameter of from 0.1 to 0.2 $\mu$m was $4\times10^8$ per liter and that of particles having a particle diameter of from 0.2 to 0.3 $\mu$m was $6\times10^7$ per liter. The particle concentration on the upstream side and the concentration of particles which had passed through the sample to the downstream side were measured with a particle counter, and the collection efficiency was determined using the following equation.

Collection Efficiency

$$\text{Collection efficiency (\%)} = [1- (\text{downstream side particle concentration})/(\text{upstream side particle concentration})] \times 100$$

Method for Judging Particle Diameter Dependence of Collection Efficiency

When the collection efficiency in the particle diameter range of from 0.1 to 0.2 $\mu$m, which is referred to as X, and the collection efficiency in the particle diameter range of from 0.2 to 0.3 $\mu$m, which is referred to as Y, satisfy the leakage judgment criteria shown in the following table, then the sample is judged to have a particle diameter dependence (be free from leakage) in the particle diameter range of from 0.1 to 0.3 $\mu$m.

| Condition | Criteria for Judgement |
|---|---|
| X ≥ 99.99994% | Downstream side particle count ≤ 5* (particle diameter range: 0.2-0.3 μm) |
| X < 99.99994% | (1 - X/100) ≥ (1 - Y/100)x10 |

* "Downstream side particle count" means the total number of particles counted in 1 minute in a measurement in which DOP having a particle diameter range of from 0.2 to 0.3 μm was used (the same applies hereinafter).

EXAMPLE 1

A pasty mixture prepared by compounding a fine PTFE powder with 20 wt% liquid lubricant was preliminarily molded and then formed into a cylindrical rod by paste extrusion. This molding was rolled into a sheet having a thickness of 0.2 mm, and the liquid lubricant was removed therefrom. The sheet was biaxially stretched to obtain a porous PTFE membrane (thickness, 10 μm; porosity, 93%; average pore diameter, 1.0 μm; average fiber diameter, 0.2 μm; pressure loss, 18 mmH$_2$O; collection efficiency, 99.999%). Subsequently, this porous PTFE membrane was bonded to a nonwoven fabric (Eleves TO303WDO, manufactured by Unitika, Ltd.; PET/PE core/sheath nonwoven fabric) by thermolaminating. This laminating of the porous PTFE membrane to the nonwoven fabric was conducted so that two layers of the porous PTFE membrane were interposed among three layers of the nonwoven fabric, as in the constitution a section of which is shown in Fig. 1.

In each of the step of stretching the porous PTFE membrane and the step of laminating to the nonwoven fabric, the sheet material was unwound from a roll and was wound into a roll after the given treatment (stretching or laminating) . In each of these steps, a static eliminator (blowing type static eliminator BLT-1000, manufactured by Kasuga Electric Works Ltd.) was disposed in each of the unwinding region and winding region. Namely, stretching and laminating were conducted while performing a static charge elimination treatment. That static eliminator is based on the technique in which the static charge built up on a work is diminished by blowing cations and anions against it. Thus, a filtering medium for air filters which had a thickness of 0.35 mm was obtained in the form of a roll comprising 300 laps of the filtering medium. The surface potential of the outermost lap of the filtering medium roll was measured and found to be 0.1 kV. The filtering medium was unwound from the roll over a length of about 0.5 m by a hand with an insulating glove, and the surface potential of the unwound part was measured and found to be 0.1 kV.

Furthermore, the filtering medium in the roll form was touched with the bare hand, and the part thus touched was examined for collection efficiency. As a result, the collection efficiency for particles having a particle diameter range of from 0.1 to 0.2 μm was 99.999994%, and the downstream side count of particles having a particle diameter range of from 0.2 to 0.3 μm was 0. Thus, this filtering medium was ascertained to have a particle diameter dependence.

EXAMPLE 2

The filtering medium obtained in Example 1 was pleated into the shape of consecutive W's with a reciprocating pleating machine, while continuously eliminating the static charge built up thereon using a static eliminator (the same as the aforementioned one) disposed by the filtering medium on the downstream side of the pleating machine. Thus, a filtering medium for air filters which had been pleated was obtained. This filtering medium was stretched out by a hand with an insulating glove, and the surface potential thereof was measured and found to be 0.2 kV. Furthermore, the filtering medium in the stretched state was touched with the bare hand, and the part thus touched was examined for collection efficiency. As a result, the collection efficiency for particles having a particle diameter range of from 0.1 to 0.2 μm was 99.999999%, and the downstream side count of particles having a particle diameter range of from 0.2 to 0.3 μm was 0. Thus, this filtering medium was ascertained to have a particle diameter dependence.

COMPARATIVE EXAMPLE 1

A filtering medium (thickness, 0.35 mm) for air filters was obtained under the same conditions as in Example 1, except that the static-charge elimination with static eliminators in the step of stretching a porous PTFE membrane and in the step of laminating to a nonwoven fabric was omitted. In this filtering medium, which was obtained in the form of a roll consisting of 300 laps of the filtering medium, the outermost lap had a surface potential of 45 kV. This filtering medium was unwound from the roll over a length of about 0.5 m by a hand with an insulating glove. This unwound part of the filtering medium was found to have a surface potential of 0.4 kV.

Furthermore, the filtering medium in the roll form was touched with the bare hand, and the part thus touched was examined for collection efficiency. As a result, the collection efficiency for particles having a particle diameter range of from 0.1 to 0.2 μm was 99.99984% and the collection efficiency for particles having a particle diameter range of from 0.2 to 0.3 μm was 99.999922%. No particle diameter dependence was observed in this filtering medium.

COMPARATIVE EXAMPLE 2

The filtering medium obtained in Example 1 was pleated into the shape of consecutive W's with a reciprocating pleating machine. In this pleating, the static charge elimination with static eliminators was omitted. This filtering medium was stretched out by a hand with an insulating glove, and the surface potential thereof was measured and found to be -0.5 kV. Furthermore, the pleated filtering medium in the stretched state was touched with the bare hand, and the part thus touched was examined for collection efficiency. As a result, the collection efficiency for particles having a particle diameter range of from 0.1 to 0.2 μm was 99.99928% and the collection efficiency for particles having a particle diameter range of from 0.2 to 0.3 μm was 99.99974%. No particle diameter dependence was observed in this filtering medium.
As shown above, it was ascertained that the filtering media obtained in the Examples, in which static charges had been diminished, were prevented from suffering the leakage phenomenon even when touched with the bare hand, unlike the filtering media obtained in the Comparative Examples. Specifically, filtering media which had a collection efficiency of 99.99994% or higher with respect to particles having a particle diameter range of from 0.1 to 0.2 μm and had a particle diameter dependence of collection efficiency in a particle diameter range of from 0.1 to 0.3 μm could be produced in the Examples.
As described above, according to the invention, the leakage phenomenon observed in filtering media for air filter use employing a porous PTFE membrane can be inhibited. Thus, an improved product yield and stabilized quality can be attained.

**Claims**

1. A filtering medium for air filters, comprising a laminate which comprises at least one porous polytetrafluoroethylene membrane and at least one air-permeable supporting member, the filtering medium having a surface potential of 0.3 kV or lower in terms of absolute value.

2. The filtering medium for air filters of claim 1, which has been folded into the shape of consecutive W's.

3. The filtering medium for air filters of claim 1, which has been wound into a roll and in which the outermost lap of the roll has a surface potential of 0.3 kV or lower in terms of absolute value.

4. A process for producing a filtering medium for air filters, which comprises a step of producing a laminate comprising at least one porous polytetrafluoroethylene membrane and at least one air-permeable supporting member, and a step of diminishing the static charge built up on at least one member selected from the group consisting of the laminate and the materials constituting the laminate.

5. The process for producing a filtering medium for air filters of claim 4, which further includes a step of folding the laminate into the shape of consecutive W's, and in which a step of static charge diminution is applied at least to the laminate which has been folded.

6. The process for producing a filtering medium for air filters of claim 4, wherein the static charge is diminished by blowing ions.

7. The process for producing a filtering medium for air filters of claim 5, wherein the static charge is diminished by blowing ions.

8. A process for producing a filtering medium for air filters, comprising a laminate which comprises at least one porous polytetrafluoroethylene membrane and at least one air-permeable supporting member, wherein at least one treatment selected from the stretching of a polytetrafluoroethylene molding for obtaining the porous polytetrafluoroethylene membrane and the superposition of materials for constituting the laminate is conducted in a series of steps comprising unwinding a roll-form work to be treated, treating the unwound work, and winding the work into a roll after the treatment, while diminishing the static charge built up on the work, to thereby successively wind the work which has undergone the treatment and is in a charge diminished state.

9. The process for producing a filtering medium for air filters of claim 8, wherein the static charge is diminished by blowing ions.

FIG. 1

FIG. 2

FIG. 3

FIG. 4

EP 1 240 935 A2